Europäisches Patentamt

**European Patent Office**

Office européen des brevets

(11) Publication number: **0 030 111**
A1

## (12) EUROPEAN PATENT APPLICATION

(21) Application number: **80304200.1**

(22) Date of filing: **24.11.80**

(51) Int. Cl.³: **B 66 F 9/07**
**B 65 G 1/04**

(30) Priority: **29.11.79 GB 7941162**

(43) Date of publication of application:
**10.06.81 Bulletin 81/23**

(84) Designated Contracting States:
**AT BE CH DE FR IT LI LU NL SE**

(71) Applicant: **I.D.C. GROUP LIMITED**
**Timothy's Bridge Road**
**Stratford-Upon-Avon Warwickshire CV37 9NJ(GB)**

(72) Inventor: **Mattingly, Christopher Thomas**
**c/o IDC GROUP LIMITED Timothy's Bridge Road**
**Stratford-Upon-Avon Warwicksh CV37 9NJ(GB)**

(74) Representative: **Anderson, John Robert**
**Browning et al,**
**WALFORD & HARDMAN BROWN Trinity House Hales**
**Street**
**Coventry, CV1 1NP(GB)**

(54) **Apparatus for loading goods into storage racks and for unloading goods therefrom.**

(57) Apparatus, for loading and unloading goods into or from storage racks, comprising a carrier (3) including means (14, 8) to guide it to move along at least the whole length of a row of racks (1) and having, or arranged to carry, hoist means (6) movable upwardly and downwardly with respect to the carrier (3), whereby the hoist means (6) is capable of inserting goods into or removing goods from any tier of a row of multi-tier racking and at any position in the length thereof. The carrier (3) may be used in combination with a fork-lift truck (4) which would drive the carrier (3) along a guideway (8) and also provide the hoist means (6). The carrier may include a tower (7) having a height at least equal to that of the level of the uppermost tier of a row of racks (1) and having tiers of racks thereon, in which goods removed from the storage racks can be temporarily located.

./...

Croydon Printing Company Ltd.

FIG.1

APPARATUS FOR LOADING GOODS INTO STORAGE RACKS AND FOR UNLOADING
GOODS THEREFROM

The invention relates to apparatus for loading goods into storage racks and for unloading goods therefrom and is particularly, but not exclusively, concerned with loading/unloading apparatus for use in narrow aisles between rows of multi-tier racking.

In conventional storage systems of the kind in which goods, usually but not necessarily pre-loaded onto pallets, are stored in rows of multi-tier racking separated by narrow aisles, it is usual to move the goods into and out of storage positions in the racking by using narrow-aisle, fork-lift trucks. This type of fork-lift truck is narrower than a conventional fork-lift truck and also has a taller mast than a conventional fork-lift truck, thereby enabling the narrow-aisle, fork-lift truck to be driven along the aisles and goods to be inserted into or removed from upper tiers of the racking, which would be inaccessible to a conventional fork-lift truck. As it is usually too costly to provide a narrow-aisle, fork-lift truck and its driver for working in each aisle, the narrow-aisle, fork-lift truck should be capable of being driven into and out of and along any of the aisles as required. The forks of the truck should also be capable of being raised to the levels of the appropriate tiers when goods are to be inserted into or removed from different positions in the racking or transferred from one position in the racking to another. The forks of the truck should also be capable of extending to either side of the fore-and-aft direction in addition to the ability to extend forward, thereby to permit goods to be inserted and removed from racking on either side of an aisle, as there is usually no room to enable the truck to turn while in the aisle. The efficiency of the system depends upon the speed at which goods can be loaded and unloaded from the racking and thus on the vertical and horizontal travel speeds of the narrow-aisle, fork-lift truck. These speeds are limited by the effect of an uneven floor on the horizontal travel of the truck and by the stability of the truck when its lifting forks are raised to the level of the upper tiers of the racking.

Although reference has been made in this paragraph to narrow aisles and to narrow-aisle fork-lift trucks, where the aisles are wider a conventional fork-lift truck could be used; but the problems of the truck being unable to turn while it is in the aisle and the problems making it difficult for the truck to have high horizontal and vertical travel speeds still arise. An object of the invention is to provide apparatus by which higher horizontal and vertical travel speeds can be employed and by which the stability of the apparatus is improved.

According to the invention, apparatus for loading and unloading goods into or from storage racks comprises a carrier including means to guide it to move along at least the whole length of a row of racks and having, or arranged to carry, hoist means thereon, the hoist means being movable upwardly and downwardly with respect to the carrier, whereby the hoist means is capable of inserting goods into or removing goods from any tier of a row of multi-tier racking and at any position in the length thereof.

The carrier may comprise, or be co-operable with, a tower having a height at least equal to that of the level of the uppermost tier of a row of racks and carrying the hoist means or having clamping means engageable with hoist means to be mounted on the carrier.

The carrier may be guided by a stationary guide-way extending along the whole length of the required travel of the carrier, that is at least the whole length of a row of racks. Where the carrier includes a tower, the said guideway would be provided at or adjacent the level of the bottom of the carrier and a second guideway may be provided at or adjacent the top of the tower.

The carrier, or the tower, where provided, may have a tier or tiers of storage racks thereon from or to which the hoist means is capable of loading goods removed from or to be inserted into multi-tier racking.

The carrier may be arranged to be driven, or otherwise propelled, along the guideway, whereby the carrier is movable along the length of the racking to any selected position therein.

The carrier may conveniently include or be used in combination with a fork-lift truck, the fork-lift truck having a mast carrying lifting forks capable of being elevated to the level of the uppermost tier of the racking, the mast and lifting forks of the fork-lift truck thereby being the aforesaid hoist means. Where the carrier comprises, or is co-operable with a tower, as aforesaid, the mast of the fork-lift truck would be arranged to be clamped to the tower. Driven ground-engaging wheels or a power output shaft of the fork-lift truck may be employed to drive the carrier along the guideway.

Where the racking is arranged in two or more parallel rows with an aisle between each pair of adjacent rows, the fork-lift truck would have lifting forks, or both lifting forks and a turntable, capable of transferring goods to or from either side of the fore-and-aft direction of the truck and, where the carrier has storage racks thereon, also capable of transferring goods to or from said storage racks, usually in the fore-and-aft direction of the truck.

The carrier may be provided with means operable to stop and to start the fore-and-aft movement of the carrier and also the hoist means at any desired position, whereby a required programme or sequence of loading and unloading can be performed either automatically or partly under the control of an operator.

The invention also provides the combination of apparatus as set out hereinbefore with multi-tier racking arranged in two or more parallel rows with an aisle between each pair of adjacent rows. The combination may also include pallets to be loaded with goods and capable of being used with the racking and the mast and lifting forks of the fork-lift truck or other hoist means.

By way of example, two embodiments of apparatus in accordance with the invention are now described with reference to the accompanying drawings, in which:-

Figure 1 is a diagrammatic perspective view of the first embodiment;

Figures 2 - 6 respectively illustrate diagrammatically five stages during the use of the apparatus, each Figure showing the racking and at least part of the apparatus in side elevation;

Figure 7 is a side elevation of the second embodiment, and

Figure 8 is a plan view of the apparatus shown in Figure 7.

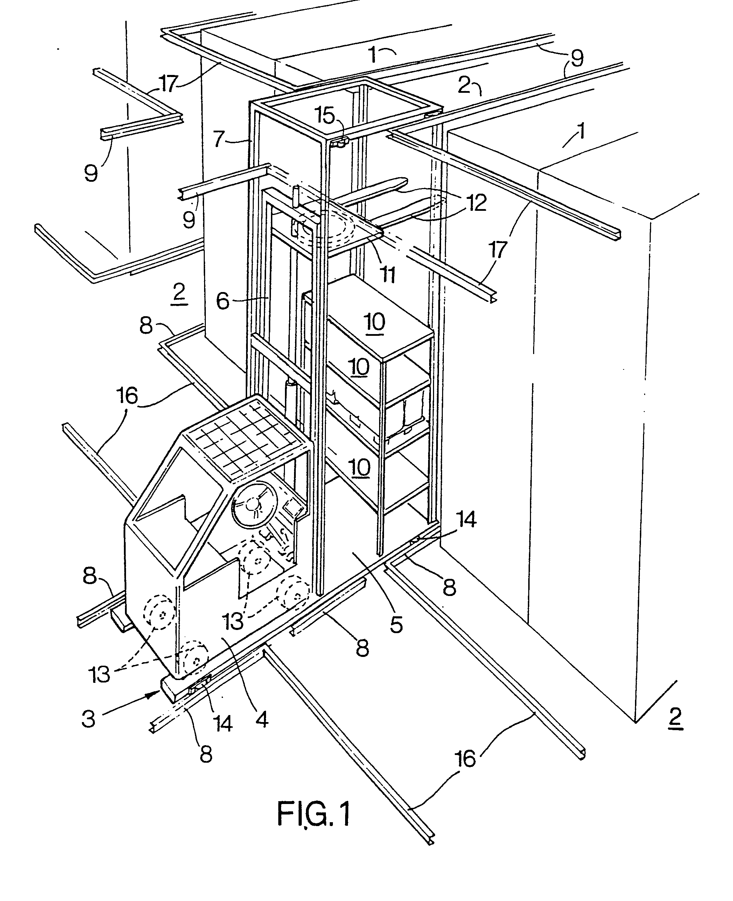

The apparatus shown in Figure 1 is intended to be used to load pallets supporting goods into storage positions in rows of multi-tiered racking indicated at 1 and to remove pallets from the racking, the rows of racking 1 being spaced apart by aisles indicated at 2. The apparatus may however be used with racking which is not arranged in parallel rows. Although the apparatus is particularly intended to be used with high multi-tier racking, it could be used with single tier racks or low racks having, say, only a few, e.g., two or three tiers.

The apparatus comprises a carrier 3 shown as a low-level platform 5 onto which a fork-lift truck 4 can be driven from floor level. Alternatively the fork-lift truck 4 may be driven into engagement with the platform 5 or may be otherwise attached to the carrier 3. As the aisles 2 should be narrow in order to reduce space not used for storage the fork-lift truck 4 may be of the narrow-aisle kind. Furthermore, narrow-aisle, fork-lift trucks usually have a taller mast than conventional fork-lift trucks and so can be used to move pallets into an from the upper tiers of the racking. The narrow-aisle, fork-lift truck which is shown in Figure 1 is one which has a mast 6 of sufficient height to reach the uppermost tier of the racking 1. Although the carrier 3 is shown as having a low platform 5, it may have instead a base frame providing runners to receive the wheels of the truck 4.

The carrier 3 may be mounted on wheels (not shown) and these, or at least one pair thereof, may be driven to propel the carrier 3 along the length of the aisle. The driven wheels may be driven by a power unit mounted on the carrier. Alternatively the ground-engaging wheels 13 of the truck 4, some or all of which may be driven, may be used to propel the carrier by direct engagement with the floor on which the carrier 3 travels. Alternatively the driven wheels 13 of the truck may be used to turn ground-engaging wheels of the carrier 3 or a power take-off shaft on the truck may be connected to drive driven wheels of the carrier 3.

The carrier has a tower 7 upstanding from the platform 5. The tower 7 is in the form of a frame which has a width permitting the carrier to travel along an aisle 2 between two rows of racking 1 and has a height greater than the height of the mast 6 of the truck 4 and thus greater than the level of the uppermost tier of the racking 1. The mast 6 is engaged with the tower 7 by locking means (not shown) engaged when the truck 4 has been driven onto or engaged with the platform 5. Thus the truck 4 is restrained, in use, from tipping relatively to the tower 7. The carrier 3 is guided along the length of the aisle by guideways indicated by rails 8 and 9 fixed respectively at the levels of the bottom and top of the racking. The rails 8 and 9 extend centrally along the or each aisle 2 throughout the length thereof. At at least one end, the rails 8 and 9 extend beyond the ends of the rows of the racking 1 to permit the carrier 3 and the truck 4 thereon to be withdrawn from the aisles 2 between the rows of racking, as illustrated. Although pairs of parallel rails 8 and 9 are shown, single guide rails may be used at either or both the top or bottom of the carrier instead. For example, they may be a pair of parallel rails at the bottom and a central single rail 9 at the top of the carrier 3. Instead of the rails 8 and 9 extending along each aisle, guide rails may extend along the front edges facing the aisle of the racking framework. The carrier 3 is provided with guide wheels to engage the rails 8 and 9. For example, as shown, the platform 5 has guide wheels 14 to engage respective rails 8 and the top of the tower 7 supports guide wheels 15 to engage respective rails 9. The guide rails 8,9 keep the carrier 3 and hence the truck 4 on a straight course and so prevent the carrier from hitting the racking during its travel along an aisle 2. Additionally, the upper rails 9 restrain the carrier 3 and hence the truck 4 from tipping sideways and pitching fore-and-aft when the forks of the truck are at or near to the top of the mast 6, this being a common fault of narrow-aisle, fork-lift trucks. In view of the guidance effected by the rails 8 and 9, much faster travel of the carrier along the aisle 2 and of the forks up and down the mast may be permitted, thus resulting in faster operating time, even where the floor surface of the aisle 2 is uneven. Furthermore, as the carrier 3 and the truck 4 are restrained from tipping sideways or pitching, the apparatus is safer to use than where a fork-lift truck is used alone, without the carrier provided by this invention.

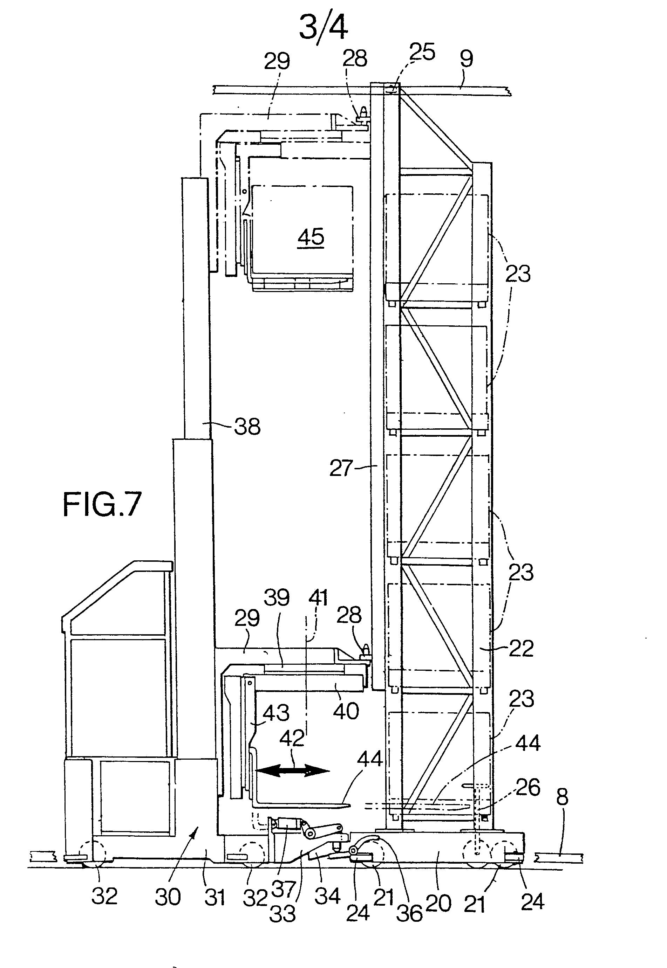

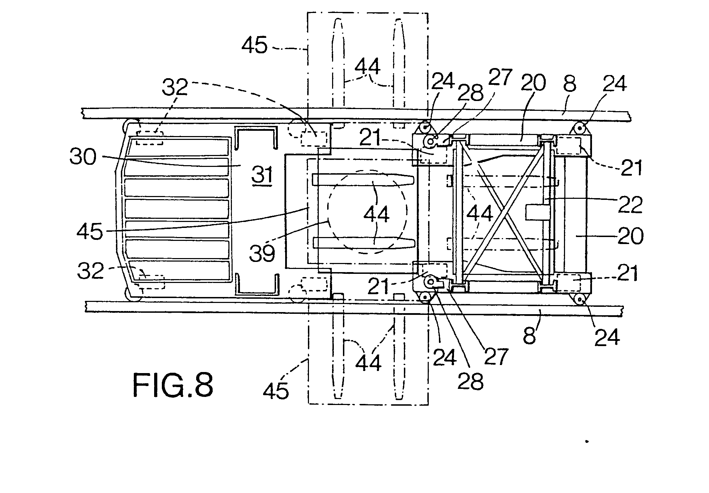

Transverse guide rails 16 and 17 arranged at right angles to the rails 8 and 9 respectively may be arranged at the ends of the rows of racking to enable the whole carrier to be swung through 90° after it has been removed from an aisle 2 and then be guided by the wheels 14 and 15 along the rails 16 and 17 to a position opposite the end of another aisle 2 where the carrier 3 can be swung through 90° and realigned with the corresponding rails 8 and 9. Transverse aisles intermediate the ends of the racking may be provided, the intermediate transverse aisles having guide rails extending therealong. The carrier may have multi-tier storage racks 10 mounted thereon. These may be rigidly fixed to the tower 7. The storage racks 10 may be used to carry goods loaded on pallets to and from storage positions in the racking 1. The mast 6 of the truck 4 may be fitted with lifting forks 12 which can be extended fore-and-aft with respect to the mast 6, as indicated, and can be turned and then extended and retracted to either side of the carrier 3 to load or to unload pallets into or from the racking 1 at either side of the aisle 2, as shown diagrammatically by a turntable type of platform 11 on which the forks 12 are mounted. A practical arrangement of lifting forks which can be swung to either side is described later with reference to Figures 7 and 8. Where the storage racks 10 are provided on the carrier 3 the lifting forks 12 would be extended in the fore-and-aft direction of the carrier to load or to unload pallets onto or from the storage racks 10. The turntable platform 11 and the lifting forks 12 may be operated by means not shown, for example, by fluid-operable, mechanical or electrical means. The truck 4 would have conventional controls (not shown) for raising and lowering the forks 12 and the platform 11 and for controlling the forward and reverse movement of the truck and thus of the carrier 3. The carrier and the racking may have trips and stop-and-start means (not shown) for stopping the carrier 3 at required positions and restarting its movement so that an operating programme or sequence of loading and unloading may be predetermined and be made automatic or partly automatic. For example the operation may be fully automatic and in that case the aisle fork-lift truck need not have a driver.

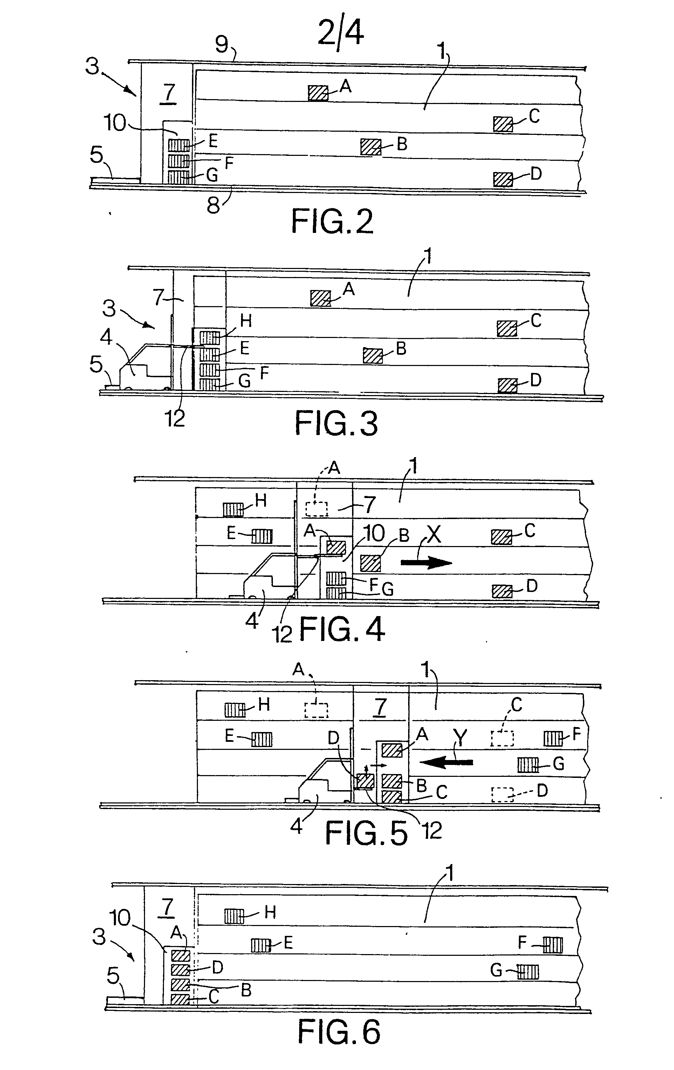

A typical operational sequence using the apparatus illustrated in Figure 1 is now described with reference to Figures 2 to 6. Figure 2 shows racking 1 containing loaded pallets A, B, C, D already in the racking. The carrier 3 is shown positioned beyond the end of an aisle 2. In this position, the narrow-aisle, fork-lift truck 4 has previously been removed from the carrier 3 and the storage racks 10 on the carrier 3 are loaded with pallets E, F, G by a free-ranging, fork-lift truck, which may be of the conventional kind, or already contain pallets E, F, G from a previous movement along the or another aisle 2. While the carrier 3 is being loaded or standing beyond an aisle 2, the narrow-aisle, fork-lift truck 4 can be mounted on another carrier 3 and used in another aisle 2. Thus one narrow-aisle, fork-lift truck 4 can be used to drive each of several carriers 3 in succession while the remaining carrier or carriers 3 are having their storage racks 10 loaded or unloaded by using a free-ranging, fork-lift truck or standing providing temporary storage for pallets or are not in use. In this way the efficiency of loading and unloading is improved.

Figure 3 illustrates that the narrow-aisle, fork-lift truck 4 has been re-engaged with the carrier 5, thereby enabling the carrier 5 to be driven by the fork-lift truck 4 along the aisle 2. The lifting forks 12 are shown holding a fourth pallet H (not shown in Figure 2) at the level of the top tier of storage rack 10.

Figure 4 illustrates a sequence of insertion and removal of pallets into and from the racking 1. As will be seen pallets H and E have been placed in the racking 1 and pallet A, which was previously in the racking 1, is being transferred by the lifting forks 12 onto a storage rack 10. The carrier 3 is being moved by the fork-lift truck 4 in the direction of arrow X.

Figure 5 illustrates the movement of the carrier 3 by the fork-lift truck 4 in the direction of arrow Y towards its initial position when the operational sequence has been completed or the storage rack 10 has been filled with pallets removed from the racking 1.

It will be seen that pallets B. C and D have been removed from the racking and pallets F and G, which were previously on the storage rack 10 on the carrier 3, are now in the racking 1. Alternatively pallets which were already in the racking 1 may be moved to new positions therein.

Figure 6 shows that the carrier 3, with the storage rack 10 filled with pallets A, B, C, D has been returned to its initial position beyond the aisle 2 and the narrow-aisle, fork-lift truck 4 has been removed, thereby enabling it to be engaged with another carrier 3 at the end of another aisle 2. The pallets A, B, C, D can then be unloaded by a free-ranging, fork-lift truck or taken to another aisle 2. Finally the storage racks 10 can be re-loaded with pallets to be placed in the racking 1 by the same or another fork-lift truck. Although in Figures 2 to 6 the pallets are indicated as being moved to or from racking on one side only of the aisle 2, by swinging the forks 12 to either side, pallets can be inserted into or removed from racking at the other side of the aisle 2.

In the second embodiment shown in Figures 7 and 8, the carrier 20 is mounted on four ground-engaging, free-running wheels 21. The carrier 20 supports a tower 22 having tiers of temporary storage racks providing pallet-storing positions indicated in chain lines ar 23, in Figure 7. The height of the tower is substantially the same as that of racking 1; as shown in Figure 1 but not shown in Figure 7. The storage positions 23 may be at spacing levels corresponding to the tiers of racking 1; but could be differently spaced and be different in number. The carrier 20 has side guidance wheels 24 (see Figure 8) which are engageable with fixed guide-rails 8, which are similar to and are similarly arranged as the rails in Figure 1. The tower 22 also has upper guidance wheels 25, of which one is shown in Figure 7, engageable with rails 9, as in Figure 1, to restrain the tower from tipping sideways. The carrier 20 may have its own manually operable steering gear, indicated at 26 in Figure 7. The tower carries a pair of fixed upright guide rails 27 having location lugs 28 to which a fork carrier 29 of a narrow-aisle type of fork-lift truck 30 is attached. The guide rails 27 therefore restrain the fork-lift truck 30 from sideways tipping and also from pitching in the fore-and-aft directions.

The fork-lift truck 30 is of known type and has a base 31 mounted on wheels 32, some or all of which are arranged to be driven by a motor or engine of the truck. The base 31 has a forward extension 33 which is locatable and engageable with a corresponding extension 34 of the carrier 20 (see Figure 7). Locking means acts to lock the fork-lift truck 30 to the carrier 20 and a brake 36 engageable with a wheel or wheels 21 of the carrier 20 is provided. The brake 36 may be operable by a ram 37 by the hydraulic system of the truck 30. The fork-lift truck 30 has a telescopic mast 38 on which the fork-carrier 29 is movable upwardly and downwardly between the lowest position, shown in full-lines, and the highest position, indicated in broken lines. The location lugs 28 travel up and down the guide rails 27 as the fork-carrier 29 is raised and lowered by the mast 38. Thus as the tower 22 is restrained from side-ways tipping movement by the rails 9, the fork-lift truck 30 and the fork-carrier 29 are also restrained from sideways tipping, particularly when the mast is fully extended. Underneath the fork carrier 29 there is a turntable 39 which in turn supports a fork-moving member 40. The turntable permits turning of the member 40 bodily about the upright axis 41. The member 40 supports a linkage 43 from which the forks 44 extend. By operating the member 40 and linkage 43 appropriately, in known manner, the forks 44 can be moved between the full-line positions shown in Figures 7 and 8 to the positions shown in chain lines in the direction of arrows 42. By also turning the member 40 by the turntable 39 about the axis 41, the forks 44 can be extended and retracted side-ways of the fork-lift truck in either direction, as indicated in Figure 8. In Figure 7, in the upper position of fork-carrier 29, a pallet 45 is indicated resting on the forks 44. Figure 8 also illustrates the pallet 45 on the forks 44 in the two side-ways extended positions of the forks and in the position where the forks are directed fore-and-aft and are retracted.

The combined fork-lift truck 30 and carrier 20 are used in the same way as the fork-lift truck 4 and carrier 3 shown in Figure 1 to stack and remove pallets, for example as described with reference to Figures 2 - 6.

Although in each of the illustrated embodiments the aforesaid hoist means and drive means for the carrier is provided by a fork-lift truck which is used in combination with the carrier 3 and 20 and is separable therefrom, the carrier 3 or 20, could be provided with integral driving means and lifting forks or with another type of hoist means.

0030111

CLAIMS

1.    Apparatus, for loading and unloading goods into or from storage racks, characterised in that the apparatus comprises a carrier (3, 20) including means (8,9) to guide the carrier to move along at least the whole length of a row of racks (1) and having, or arranged to carry, hoist means (6, 38) thereon, the hoist means being movable upwardly and downwardly with respect to the carrier (3), whereby the hoist means is capable of inserting goods into or removing goods from any tier of a row of multi-tier racks (1) and at any position in the length thereof.

2.    Apparatus as claimed in Claim 1 in which the carrier (3, 20) comprises, or is co-operable with, a tower (7, 22) having a height at least equal to that of the lever of the uppermost tier of a row of  multi-tier racks (1) and carrying the hoist means (6, 38) or having clamping means engageable with hoist means to be mounted on the carrier.

3.    Apparatus as claimed in Claim 1 in which the carrier (3, 20) is guided by a stationary guideway (8,9) extending along the whole length of the required travel of the carrier, that is at least the whole length of a row of racks (1).

4.    Apparatus as claimed in Claim 2 in which the stationary guideway comprises a first stationary guideway (8) at or adjacent the level of the bottom of the carrier and a second stationary guideway (9) at or adjacent the top of the tower (7, 22).

5.    Apparatus as claimed in any preceding claim in which the carrier (3,20), or the tower (7, 22), where provided, has a tier or tiers of storage racks (10, 23) thereon from or to which the hoist means (6, 38) is capable of loading goods removed from or to be inserted in said multi-tier racks (1).

6.  Apparatus as claimed in any preceding claim including, or to be used in combination with, a fork-lift truck (4, 30), the fork-lift truck (4, 30) having a mast (6, 38) carrying lifting forks (12,44) and being capable of being elevated to the level of the uppermost tier of said multi-tier racks (1).

7.  Apparatus as claimed in Claim 2 or 4 to be used in combination with a fork-lift truck (4, 30), the fork-lift truck (4, 30) having a mast (6, 38) carrying lifting forks (12, 44) and being capable of being elevated to the level of the uppermost tier of said multi-tier racks (1), clamping means (27, 28) being provided to clamp the mast to the tower.

8.  Apparatus as claimed in Claim 6 or 7 in which the carrier (3, 20) is arranged to be driven along the or each guideway (8, 9) by driven, ground-engaging wheels of the fork-lift truck (4, 30) or by a power output shaft thereof.

9.  Apparatus as claimed in any one of Claims 6 - 8 in which the storage racks (1) are arranged in two or more parallel rows with an aisle (2) between adjacent rows, the fork-lift truck (4, 30) having lifting forks (12, 44) or lifting forks and a turntable (11, 39), capable of transferring goods to or from either side of the fore-and-aft direction of the fork-lift truck and, where the carrier or the tower has storage racks thereon, also capable of transferring goods to or from said storage racks (10, 23).

10.  Apparatus as claimed in any preceding claim including means operable to stop and to start the fore-and-aft movement of the carrier (3, 20) along the row or rows of racks (1) and also the hoist means 6, 38) at any desired position.

FIG.1

FIG.2

FIG.3

FIG. 4

FIG.5

FIG.6

FIG.7

FIG.8

European Patent Office
Application number
EP 80 30 4200.1

# EUROPEAN SEARCH REPORT

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | GB - A - 1 132 263 (C.T.P. et al.) <br> * entire document * <br> -- | 1-3,5, <br> 8,9 | B 66 F  9/07 <br> B 65 G  1/04 |
| X | US - A - 3 836 031 (WEISKER et al.) <br> * fig. 1, 3 * <br> -- | 1,3,4, <br> 6,8 | |
| X | US - A - 3 727 778 (HOLLENBACH) <br> * fig. 1, 3, 6 * <br> -- | 1-9 | |
| | DE - B2 - 2 508 696 (EATON) <br> * claims 1, 9; fig. 1 * <br> -- | 1-3 <br> 7,8 | **TECHNICAL FIELDS SEARCHED (Int. Cl.3)** |
| | DE - B - 2 151 940 (EATON) <br> *  claims 1 to 3; fig. 1 to 3 * <br> -- | 1,3, <br> 6-8 | B 62 D  1/26 <br> B 65 G  1/04 |
| | DE - A1 - 2 450 034 (CLARK EQUIPMENT) <br> * claim 1; fig. 1 * <br> -- | 1,3,6, <br> 8 | B 66 F  9/00 |
| | DE - U1 - 7 922 103 (KABEL- UND METALL-WERKE GUTEHOFFNUNGSHÜTTE) <br> * claim 1 * <br> -- | 1,3,8 | |
| | FR - A - 1 449 618 (WAGNER APPARATEBAU) <br> * fig. 1 to 5 * <br> -- | 1,3,6, <br> 8 | **CATEGORY OF CITED DOCUMENTS** <br> X: particularly relevant <br> A: technological background <br> O: non-written disclosure <br> P: intermediate document <br> T: theory or principle underlying the invention <br> E: conflicting application |
| | US - A - 4 043 463 (HANSEN) <br> * claim 1; fig. 1 * <br> -- | 1,3,6, <br> 8 | D: document cited in the application <br> L: citation for other reasons |
| | ./.. | | &: member of the same patent family, corresponding document |

The present search report has been drawn up for all claims

| Place of search | Date of completion of the search | Examiner |
|---|---|---|
| Berlin | 20-02-1981 | KANAL |

EPO Form 1503.1  06.78

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 143 081 (DOLPHIN et al.) <br> * fig. 1 to 4 * <br> -- | 1,6,8 | |
| A | DE - C - 1 166 699 (STEINBOCK) <br> * claims 1, 2; fig. 1 to 6 * <br> -- | 1,2,5, 6,8 | |
| A | DE - A1 - 2 535 208 (BENGEL) <br> * claims 1, 3 * <br> -- | 1,2,5, 6,8,10 | |
| A | US - A - 3 520 427 (OFFEN) <br> * fig. 1, 4 * <br> ---- | 1,2,5, 8 | **TECHNICAL FIELDS SEARCHED (Int. Cl.³)** |

EPO Form 1503.2 08.78